Europäisches Patentamt

European Patent Office

Office européen des brevets

(11) Publication number: **0 103 779**
**A2**

(12) # EUROPEAN PATENT APPLICATION

(21) Application number: 83108413.2

(22) Date of filing: 26.08.83

(51) Int. Cl.³: **E 21 B 43/25**
**E 21 B 37/08, E 21 B 33/13**

(30) Priority: 20.09.82 US 420140
17.12.82 US 450519
24.01.83 US 460130

(43) Date of publication of application:
28.03.84 Bulletin 84/13

(84) Designated Contracting States:
DE FR GB NL

(71) Applicant: Oliver, John E.
3752 Del Monte
Houston Texas 77019(US)

(71) Applicant: Singer, Arnold M.
3042 Las Palmas
Houston Texas 77027(US)

(72) Inventor: Oliver, John E.
3752 Del Monte
Houston Texas 77019(US)

(72) Inventor: Singer, Arnold M.
3042 Las Palmas
Houston Texas 77027(US)

(74) Representative: Jack, Bruce James et al,
FORRESTER & BOEHMERT Widenmayerstrasse 4/I
D-8000 Munchen 22(DE)

(54) Removing contaminates from a well fluid and well system.

(57) An improved process for removing solid contaminates from a high density, salt-type aqueous drilling/completion packer fluid prior to its introduction into the well bore and for removing contaminates such as drilling mud and fluids from the well system prior to the introduction of brine to maintain the brine in a solids free state. To remove the solid contaminants, small effective amount of an alcohol and a surfactant are added to the brine. After the solid contaminates agglomerate, the solids are separated, leaving the brine in a substantially solids-free state.

To remove the contaminates from the well system, treated water is prepared with a surfactant and alcohol admixed in clean water. Without interrupting circulation, the treated water displaces the fluids and drilling mud within the well system. Circulation of the treated water continues until substantially all of the contaminates are carried in the circulated treated water. The treated water may be preceded or followed by another fluid which assists in removing the contaminates. The solids-free brine is introduced into the well system to displace the treated water without exposure to the contaminates.

EP 0 103 779 A2

Croydon Printing Company Ltd

Removing contaminates from a well fluid and well system

This invention relates to the use of high density well fluids such as brines in well bores, and it more particularly relates to the removal of contaminates from a well system and from a high density brine prior to use of the brine in the well system.

Well fluids such as aqueous brine solutions of high density are used in well systems employed in the production of petroleum. The term "well fluid" as used herein is intended to designate liquids which are water continuous and which may contain fresh water, sea water, or natural brine, and varying amounts of dissolved solutes such as salts, corrosion inhibitors and gases. These fluids, colloquially called "brines", have been used as drilling, completion and packer fluids, especially in deep wells subject to high formation gas pressures at elevated temperatures. These fluids typically contain one or more of the chlorides and/or bromides of sodium, potassium, calcium, and zinc, and may include corrosion inhibitors and other salts such as soda ash. The density of these salt-type well fluids depends on the particular salt, or mixture of salts, and their concentration in the aqueous well fluid. Usually, these salt-type well fluids have a density in the range of between about 1 and 2.3 kg/litre (8 and 19 pounds per U.S. gallon).

Such a salt-type fluid, or brine, should be solids-free for its use as a well fluid. If there are solids in a packer or completion fluid, they can cause serious injury to a producing formation by plugging of the pore spaces therein or even of the perforations and channels provided to induce fluid flows between the formation and the well bore. If there are solids in a packer fluid, the solids will precipitate with time upon the packer. As a result, these solid deposits make it difficult to disconnect the tubing from the packer with a resultant costly well workover.

A high density brine can be prepared at the wellsite by dissolving the prescribed amount of salt into the aqueous phase, which phase is principally fresh or sea water but which can include various inhibitors for preventing pitting, corrosion, etc. The mixture is circulated or agitated in the surface mud system equipment until there are no undissolved salt solids. Naturally, the problems of adding salts to be dissolved in the aqueous phase become progressively more severe as the density increases, both in time, manpower and equipment requirements.

At present, vendors will deliver to the wellsite a prepared high density brine of a desired density and combination of selected ingredients. It is desirable that these well fluids be clean and free of solids. The delivery of brine usually requires several changes in containers. For example, the brine may be moved from the vendor's tanks to truck transport, then to an offshore supply boat and finally into the rig mud system. In most circumstances, the brine thereby becomes contaminated by undesired solids, including residual water-wetted solids and/or oil-based drilling mud, weighting agents such as barite, rust, salt, silt and sand, ferrous and ferric precipitives, and other undissolved materials. Contaminating liquids such as mud bases, lubricants and diesel fuel can also be present in the rig mud system and become entrained in the brine when this is loaded into that system. Usually, these contaminating liquids are occluded or absorbed on the undissolved solids.

If the amount of solids in the brine were small the rig equipment could be used for their removal, usually in a stepwise flow pattern through cartridge filters. However, the cost of manpower and rig time (e.g. $100,000 per work shift) in filtering the brine is extremely expensive unless the solids are less than 0.01% by weight of the well fluid and are granular, not gelatinous as is usually the case with hydroxyethyl cellulose (HEC), polymer or bentonite mud contamination.

Contamination of brine by drilling mud components is most common since the brine is usually handled at the rig in parts of the mud system. The mud system usually suffers contamination during washing of the cased well bore to remove residual mud and cement solids immediately prior to the introduction of the high density salt-type completion/packer brines. Only a small amount of the wash liquid needs to be combined with the brine for the solids content of the brine to become excessive. The brine must, therefore, usually be treated to remove these solids. Any residual solids in the brine must be less than 5 microns in maximum dimension otherwise they cause formation plugging.

As mentioned, the use of cartridge, leaf or bed type filters is impractical on other than very low solid contents in the brine. Further, rig time in equipment and manpower is restricted and available only for critical operations, namely optimum drilling of the well bore. As a result, brines with large solids contamination must be either discarded or returned to some facility for purification. Since the brine is very expensive - e.g. $1900 - $5700 per cubic metre ($300 - $900 per 42 US gallon barrel) - it cannot be economically discarded. Furthermore, the brine must be carefully handled so as not to be spilled or wasted because environment injury occurs from strong aqueous brines.

It has been a practice to clean the rig mud system of residual drilling mud prior to the introduction of the brine, by various washing and manual clean-up techniques, in an attempt to reduce the degree of filtration required. For example, offshore rigs use jet streams of sea water and crewpersons with scrapers, brooms, etc. to attempt to remove residual drilling mud constituents. This technique for cleaning thoroughly the rig mud system is very hazardous (slippery, wet, caustic and cramped work areas) and burdensomely expensive in labour costs. In addition, the cleaned mud system yet has residual drilling mud which hides in crevices, but is entrained in the high density brine which passes therethrough. During the cleaning of the mud system, the rig must be shut down for between 5 and 13 hours on the average. The cost of cleaning ranges from about $3000 to $8000 per hour. Thus, avoiding this cleaning procedure would save rig down time and costs of up to $104,000.

As a practical result, present day rig practices, especially offshore, require full stream filtration (usually in cartridge filters) of the brine so that solid levels less than 0.2% are present immediately before the brine is sent into the well bore.

Even though the brine can be made solids-free at the rig, it is also necessary to clean the well system of drilling fluid, mud solids or other contaminates, before introduction of the brine into it so as to maintain the brine in a solids-free state during use, as hereinabove discussed. One of the main problem areas in removing drilling fluid and mud is from the wellbore equipment which includes the tubing or well pipe and the annulus between it and the casing or surrounding wellbore.

Many chemical washes have been proposed and used to remove drilling fluid and mud from the wellbore equipment prior to introduction of the solids-free brine. For example, circulating chemical washes using water with surfactants, viscosifiers and gel agents, chemical aids such as sodium tetraphosphate, and weighting agents such as barite, have been used under turbulent flow conditions for achieving effective mud and fluid removal from the wellbore equipment. In some cases, the chemical washes are used as aqueous spacers for increased drilling fluid removal much in the same manner as used to displace drilling fluid prior to introducing a cement slurry used in well cementing operations.

Usually, the chemical washes are designed for turbulent or laminar flow with continuous aqueous phases of fresh and salt water, or for plug flow using gelled water-based phases. The gelled water phase or plug is intended to be sufficiently viscous to reduce settling of drilling fluid from it, especially solids. If oil-based drilling fluid is being displaced, diesel oil and an emulsifier are added to increase removal of the drilling fluid and its mud cake. Some chemical washes combine turbulent and plug flow aqueous phases to enhance the displacements of drilling fluid and mud from the wellbore equipment, especially prior to cementing operations or introduction of completion brine. These chemical washes are used, in some operations, in a single pass travel through the wellbore equipment for removing the drilling fluid so as to save rig time.

We have now developed a process for removing the contaminating solids from high density, salt-type (brine) aqueous drilling, completion and packer fluids before their placement into a well bore and for removing substantially all of the drilling fluids and mud, including solids such as barite, bentonite, cement, oil materials, as well as other contaminates from the well system prior to entry therein of the solids-free completion and packer brine to prevent recontamination of the brine. As a result, the brine remains substantially free of solids during use in the well system. The overall rig down time and brine cleanup time to practice the present process is substantially reduced. Especially large rig downtime savings are achieved in deep offshore wells with high angles of directional wellbores (e.g. 70 degrees).

In one aspect, therefore, the present invention provides a process for eliminating contaminates from a well system prior to introduction of solids-free completion and packer brines, that is characterised by displacing contaminates from the well system by circulating treated water therein to displace a major portion of the contaminates from the well system, said treated water comprising clean water containing a surfactant and alcohol and subjected to agitation and shear mixing; and by thereafter circulating in the well system a solids-free well fluid for displacing or carrying the treated water from the well system.

In practising this process, contaminates in the well system may first be displaced therefrom by circulating therein a first spacer fluid until a major portion of the contaminates are carried in the spacer fluid. This first spacer fluid is then displaced by the said treated water that is circulating in the well system substantially removes therefrom the remaining contaminates not picked up by the first spacer fluid. Preferably the treated water is displaced from the well system to a suitable disposal region by circulating a second spacer fluid in the well system before the solids-free well fluid is introduced and without interrupting circulation through the well system. One or both of the spacer fluids are preferably clean water, a brine or a mixture of clean water and brine.

Preferably the first spacer fluid is an aqueous spacer containing a viscosifier to produce a non-newtonian fluid that is circulated in the well system as a slug in a gel state in laminar flow, and the treated water is a newtonian fluid that is circulated at turbulent flow conditions through the well system.

Similarly, any second spacer fluid used may advantageously be an aqueous spacer containing a viscosifier to produce a non-newtonian fluid that is circulated in the well system as a slug in a gel state in laminar flow, for carrying the treated water from the well system without substantial mixing of the aqueous spacer or treated water into the following solids-free well fluid.

The aqueous spacers are conveniently clean water containing a viscosifier polymer.

If the drilling fluid includes inverted emulsion (water-in-oil) residues such as mud cake, a hydrocarbon such as an organic based solvent may be included in the first aqueous spacer.

The first aqueous spacer may also include a weighting agent.

Preferably the said surfactant has a molecular weight in the range from about 150 to about 500 with predominantly hydrophobic characteristics, and is selected from aliphatic amines, aliphatic amides and aliphatic amine oxides in which the amine or amide has an alkyl group with between 8 and 18 carbon atoms; and wherein said alcohol is an aliphatic alcohol with between 5 and 8 carbon atoms.

Desirably the surfactant is bis hydroxy ethyl cetyl amine or the amide reaction product of oleic acid and diethanolamine and triethanolamine; and the alcohol is n-hexanol or 2-ethyl hexanol.

In making up the treated water it is often advantageous to add the alcohol first to clean water, and thereafter to add the surfactant.

The surfactant and the alcohol are conveniently each added in a volume of less than about 1 percent to the clean water for producing the treated water. When the treated water is prepared in this way and non-newtonian aqueous spacers are employed, the plug volume of these is preferably an order of magnitude less than that of the treated water circulated in the well system.

In practising the process, suspension of drilling mud and other contaminates in the circulating treated water may be promoted by reciprocating the well pipe within the well bore, with periodic rotation.

The invention also provides, in a further aspect, a process for producing a solids-free aqueous fluid from an aqueous fluid contaminated with solids such as rust, sand and drilling mud, by introducing in small effective amounts an aliphatic alcohol with between 5 and 8 carbon atoms and a surface active chemical aid into the fluid, thereby to agglomerate solids therein, and separating the agglomerated solids from the fluid before it is utilized in a solids-free state, the surface active chemical aid including a surfactant having a molecular weight in the range of about 150 to about 500 with predominantly hydrophobic characteristics and selected from aliphatic amines, aliphatic amides and aliphatic amine oxides, in which the amine or amide have an alkyl group with between 8 and 18 carbon atoms, characterised in that the alcohol is 2-ethyl·hexanol.

The aqueous fluid is, for instance, a well fluid of a high density type having at least one of sodium, potassium, calcium and zinc chlorides and bromides, and the agglomerated solids are separated from the fluid before its introduction into a well bore in a solids-free state.

Conveniently the surfactant of the chemical aid is the amide reaction product of diethanolamine and triethanolamine with an organic fatty monobasic acid of the general formula $C_nH_{2n+1}COOH$ wherein n is an integer between 12 and 18.

The alcohol and the surfactant are preferably used in a 50/50 mixture by volume.

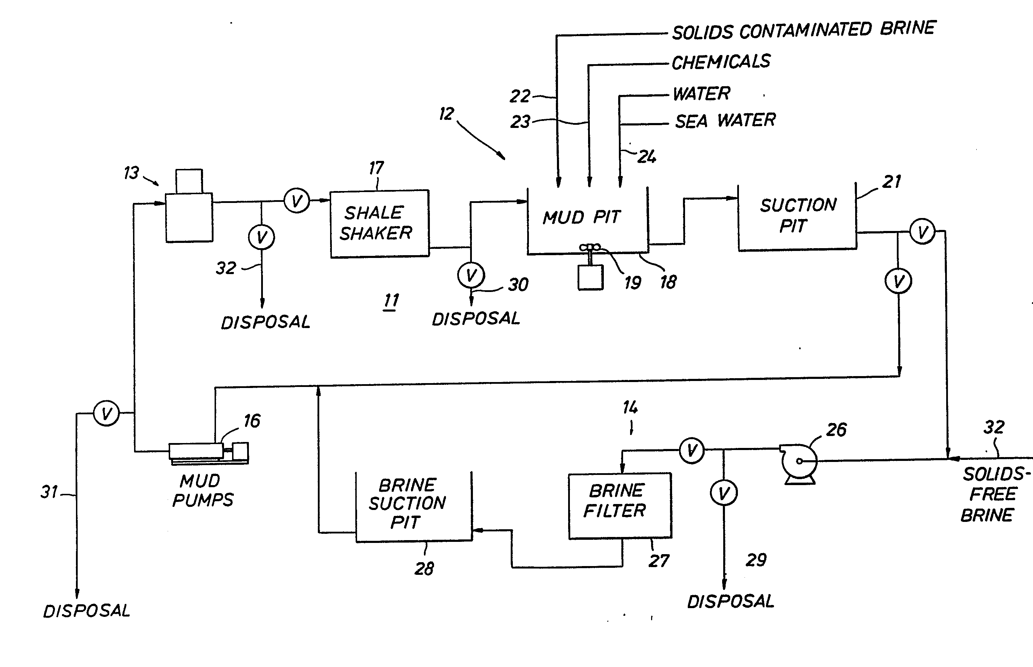

The single Figure of the accompanying drawings is a schematic flow diagram illustrative of the drilling mud equipment on a well system which includes apparatus for preparing solids-free brine prior to its introduction into a wellbore and for circulating treated water through the well system prior to introduction of the brine.

The drawing shows in schematic a well system 11 which includes surface equipment 12 and wellbore equipment 13 forming a part of the drilling mud system which may be found on offshore oil-well rigs. Also, the well system 11 can include a filtration unit 14 which assists in removing solids so as to provide a high density brine with a low solids content, e.g. 0.2% or less by weight. The well system 11 can include other apparatus, or apparatus in a different arrangement and yet be used to practice the present improved process.

For example, the surface equipment can include mud pumps 16 to circulate drilling mud through the wellbore equipment 13, and the circulating loop from this equipment can have a shale/desander/desilter shaker 17, a mud pit 18 with power driven mixers 19 and a suction mud pit 21. The mud pit 18 and suction pit 21 can be conventional metal vessels such as used offshore.

The mud pit 18 may contain inlets 22, 23 and 24 for the addition of various well materials such as solids-contaminated brine, chemicals and clean or sea water. The terms "clean" or "sea" water in this context are meant to designate water that may be fresh or salty as from the ocean but with relatively low solids content, e.g. less than 200 p.p.m.

In usual practice, the surface equipment 12 will be used to receive solids-contaminated brine from a source, such as barge or marine vessel transport, and to treat the brine to a solids-free condition for placement into the wellbore equipment 13. It is also used, as will be explained, to preclean the well system before solids-free brine is introduced thereinto.

The solids-contaminated brine is placed into a suitable container (not shown) which can be exposed to air or sealed as is desired. A mixer (not shown) is provided in the container so that the materials used in the present process can be thoroughly mixed with the brine. The mixer can be either an impeller type or a centrifugal reciprocating loop type. In addition, the container is provided with a suitable mechanism (not shown) to remove the agglomerated solids from the liquid phase. For example, the mechanism can be a rotary sweeper to remove the solids over an inclined discharge ramp such as used in air flotation cells. Alternatively, the container can be provided with adjustable liquid draw off pipes so that the solids-free brine can be decanted away from the removed solids. If desired, the container can be provided with both the sweeper and the decanter mechanism for separating the solids and the liquid phases. Usually, the container can be operated at the ambient temperatures at which the brine is secured.

The brine as received is assumed to be heavily loaded with solids which may be sand, formation particles and debris, oil, pipe dope, rust, insoluble carbonates, mud fluids and solids such as barite, emulsifier, thinners, cement and other solid materials in various combinations and amounts that can be found in the well circulation system.

As the first step of this process, it is preferred to admix with the contaminated brine a small but effective amount of an aliphatic alcohol. The amount of the alcohol required is usually not above about 2% volume. Usually, good results are obtained using alcohol in amounts above about 0.5% by volume. In most brines, the alcohol can be used in the amount of 0.5% by volume and larger amounts, such as 1.0% by volume, do not seem to appreciably increase the described solid removal results. Usually, the solids removal results decrease when the amount of the alcohol is decreased substantially below the 0.5% by volume level.

After the alcohol is thoroughly distributed in the brine, the next step of this process is to admix a surface active chemical aid. The amount of the chemical aid required is usually not above about 2% volume. Good results are obtained by using chemical aid amounts above about 0.5% by volume. In most brines, the chemical aid can be used in the amount of 0.5% by volume and larger amounts, such as 1.0% by volume, do not seem to appreciably increase the desired solid removal results. Usually, the solids removal results decrease when the amount of the. chemical aid is decreased substantially below the 0.5% by volume level. Large amounts (e.g. above 3% by volume) of the chemical aid increases the amount of brine trapped in the removed solids. The chemical aid, and particularly the surfactant, appears to change the surface tension of the boundary film surrounding the negatively charged solid particles, and especially the bentonite constituents from drilling muds. This effect provided by the chemical aid is primarily the agglomeration of a solids mass from the brine.

It has been found that the minimum effective amounts of the alcohol and surface active chemical aid depend upon their activity feature and the particular solids in the brine. Thus, this minimum effective amount is empirical and there does not seem to be a determinable relationship in these amounts between a particular alcohol and a certain surface active chemical aid from the groups hereinafter defined.

After the alcohol and chemical aid are distributed within the brine, it is allowed to rest in the quiescent state. The solids are removed from the liquid phase by agglomeration into a gel-like soft mass which may float at the surface or settle to the container bottom depending upon the density of the agglomerated mass of solids. These solids remain stable in this agglomerated mass for substantial periods of time (e.g. a week) but can be redispersed if the brine is subject to remixing operations. The agglomerated solids are removed from the liquid phase by the sweeper or by decanting, or by both in some instances, as where part of the solid mass floats and another part of the mass sinks to the container bottom.

Generally, if the alcohol is added first to the brine and then followed by the chemical aid, an immediate clearing of the liquid phase occurs upon termination of the mixing operations. Addition of the chemical aid before, or with, the alcohol, sometimes requires a long quiescent condition for clearing solids from the liquid phase. The solids clearing time is usually completed within minutes.

In either event, once the liquid phase has cleared, and the agglomerated mass of solids removed from it, the resultant brine is substantially solids-free especially of particle sizes greater than 5 microns in maximum dimension.

The alcohol is 2-ethyl hexanol which is also known as 2-ethyl hexyl alcohol and octyl alcohol. The chemical abstract service name is 1-hexanol, 2-ethyl. This alcohol can be obtained from sources of specialty solvents, and its slow evaporation rate and solvency make it useful in the present process. It has low water solubility and low surface tension properties which are an advantage in readily separating from the brine being cleaned of solids.

A good source for the alcohol is the suppliers to the producers of plasticizers for vinyl resins. Obviously, the alcohol does not need to be of chemical purity but usually will be 99.0% by volume of pure alcohol with slight amounts of organic acids and aldehydes that do not interfere in this process.

The 2-ethyl hexanol can be obtained commercially and it has a relatively high COC flash point of $84^\circ$C. ($183^\circ$F.) with a specific gravity of about 0.83 at $25^\circ$C. ($77^\circ$F.).

The surface active chemical aid includes a surfactant, and usually includes a carrier solvent such as a small amount of an aromatic hydrocarbon, corrosion and pitting inhibitor, and other additives desired to be added to the aqueous well fluid. The surfactant should have a molecular weight in the range of about 150 to about 500 with predominantly hydrophobic characteristics. The surfactant is selected from aliphatic amines, aliphatic amides and aliphatic amine oxides in which the amine and amide have an alkyl group with between 8 and 18 carbon atoms.

Preferably, the surfactant is the amide reaction product of a fatty monobasic acid and a secondary or tertiary amine. More particularly, the fatty acid can be given the formula $C_nH_{2n+1}COOH$, wherein n is an integer between 12 and 18. The fatty acid can be selected from the group of oleic and dimerized oleic, linoleic, palmitoleic, palmitic, myristic, myristoleic and stearic acids. The oleic acid amide products give good results.

The secondary and tertiary amines are selected from normal aliphatic amines that react with the fatty monobasic acids to form fatty amides that are generally used as nonionic emulsifiers. Good results are obtained when these amines are selected from diethanolamine and triethanolamine and mixtures thereof.

One surfactant giving excellent results with 2-ethyl hexanol is a product of Witco Inc., and available under the tradename "Witcamide 1017 (surfactant)". This product is reported to be the amide (salt) reaction product of oleic acid, and diethanolamine and triethanolamine. It has a specific gravity of 1.0 (same as water) is amber with a PMCC flash point above 93°C. (200°F.), and it is a product not hazardous under current U.S. Department of Labor definitions.

The operation theory of the alcohol and surface active chemical aid in the present process could not be determined within certainty from information presently available. It is believed that the alcohol serves to destabilize the dispersed solids by disrupting their electrophoretic charges, and then the surfactant acts to gather the solids, and assembled oily materials, into a loose solids system that can be removed by careful liquid/solids phase separation techniques which do not impose shear or mixing energy during solids removal. For example, the liquid phase may be decanted from the solids. Alternatively, the solids can be removed gently by a sweeper such as used in air flotation cells.

It is preferred that the alcohol be added first and thoroughly admixed into the aqueous brine before the addition of the surface active chemical aid. However, with certain alcohol and surface active chemical aid combinations, these materials can be added together and good solids removal results can be produced in this process. At this time, there is no known guideline to aid in selecting these materials for use together in the brine so as to produce the same level of good results as provided by the separate but successive addition of the alcohol and then the surface active chemical aid. Likewise, with certain ingredients, the surface active chemical aid can be admixed first with the brine, and then the alcohol be added, with good solids removal by this process. At this time, there is no known guideline to aid in selecting which surface active chemical aid and alcohol will provide in this additional arrangement the desired good solids removal from brine. Unless the alcohol is first mixed into the brine and then followed by adding the surface active chemical aid, some experimentation will be required to determine which pairs of these materials can be added together or in reverse order, and yet produce the desired good solids removal by the present process.

In general, the present process can be used to remove solids from all salt-type aqueous well fluids. Usually, the presence of corrosion inhibitors, antipitting compounds, etc. will not create any problems in solids removal. Some of the materials used in preparing drilling muds can interfere in the process, as by requiring increased amounts of alcohol, surface active chemical aid, or in extending separation of the solids from the liquid phase. These interfering materials can be removed before practicing the present process steps. For example, the well fluid may have an appreciable amount of polyelectrolytes or polymers such as cellulose-based organic fluid loss agents (e.g. hydroxyethylcellulose or HEC). In these cases, the polymer can be removed by prior treatment of the well fluid with a strong oxidant such as hydrogen peroxide before practicing the process on the well fluid.

An inlet 35 to the pump 26 can be used to introduce the solids-free brine into the filtration unit 14. The filtration unit is interconnected by valving and flow lines to the suction pit 21 and mud pumps 16 so that the brine can be moved by a centrifugal pump 26 through a filter 27 (e.g. cartridge type) into a brine suction pit or vessel 28. Then, the mud pumps 16 can introduce the brine into the wellbore. The filtration unit provides additional solids removal capability to the process, but may be omitted when sufficient contaminates are eliminated by the alcohol and surface active agent treatment.

The wellbore equipment 13 can include the wellhead, casing, tubing, packers, valving and other well associated apparatus, such as the blow-out preventers and surface mud lines, etc.

Several disposal lines 29-32, with auxillary control valves are included in the well system 11 so that fluid from either the surface equipment 12 or the filtration unit 14 can be discharged to a suitable disposal in a pollution free and environmentally safe region.

Prior to introduction of the solids-free brine into the well system 11, the well system must be cleaned of drilling mud and fluid, both as to solids and oil material and other contaminates. For this purpose, in one embodiment of the invention, the drilling mud and fluids are displaced from the well system by circulating therethrough a suitable volume of a spacer fluid constituting clean water introduced into the mud pit 19 from inlet 24. The clean water is circulated by the mud pumps 16. A major portion of the drilling mud is removed from the well system and carried in the clean water, which water can be discharged through one or more of the discharge lines to a suitable disposal region.

At this time, a treated water is prepared, preferably in the mudpit 18, by adding together clean or sea water, a surfactant and an alcohol. The treated water is subjected to agitation and shear mixing by the mixer 19 while it is continuously circulated through the well system in both the surface and wellbore equipment. The treated water displaces the now contaminated water from the well system via one of the discharge lines 29-32. Importantly, the treated water is circulated through those parts of the well system in which the brine is to be carried. The treated water is circulated in the well system 11 until substantially all of the residuary drilling mud and fluid are suspended therein.

Usually, the treated water is comprised in a chemical : water ratio equivalent to 4 drums (each of 55 gallons) of chemical to each 500 (42 gallon) barrel of water, the chemical content being a 50/50 composition of the surfactant and alcohol. As a result, the treated water has a concentration by volume each of about 0.8% of surfactant and alcohol. In most situations, the concentration of the chemicals need not be greater than 1% and a 0.5% concentration works well.

The alcohol can be an aliphatic alcohol with between 5 and 8 carbon atoms and the surfactant is a surface active chemical aid with a molecular weight in the range of about 150 to about 500 with predominantly hydrophobic characteristics. The surfactant is selected from aliphatic amines, aliphatic amides and aliphatic amine oxides in which the amine and amide have an alkyl group with between 8 and 18 carbon atoms. The surfactant can most conveniently be an amide such as the amide reaction product of oleic acid and diethanolamine and triethanolamine previously described.

The alcohol and surfactant can be selected and administered as hereinabove described for the steps relating to removing the contaminates from the high density brine: however, in the preferred embodiment, the alcohol is 2-ethyl hexanol and the surface active chemical aid is bis hydroxy ethyl cetyl amine and each chemical is used in the amount of 0.5% volume of the clean/sea water used in preparing the treated water.

Other alcohols that work well include pentanol, n-hexanol and octanol.

Various amines can be used in this process. For example, the alkynol amines which are available under the Acquiness trademark can be used, such as "Acquiness MA401A". It is understood that this amine is principally bis hydroxy ethyl cetyl amine.

Other examples of amines usable in this invention are cocoamine, octylamine, dioctylamine, decylamine and dodecylamine. Cocoamine may be generally represented by the formula $CH_3(CH_2)_{10}CH_2-NH_2$ and it is prepared from monoethenoid fatty acids derived from coconuts. The "coco" group $C_{12}H_{25}$ is not a group containing a specific number of carbon atoms, but is a number of individual groups containing different numbers of carbon atoms. However, the $C_{12}H_{25}$ group is in greater amount than any other group.

The cocoamine may be a condensation product, i.e. oxalkylated cocoamine such as ethoxylated cocoamine with between 2 and 15 mols of ethylene oxide. More particularly, the condensation product is formed by subjecting cocoamine to a condensation with a plurality of mols of ethylene oxide in a manner well known in the art. In general, the condensation product of a mol of cocoamine with between 2 and 15 mols of ethylene oxide may be employed with good results. Preferably, the condensation product is formed by condensing 10 mols of ethylene oxide per mol of cocoamine. Expressed on the basis of molecular weight, the ethoxylated cocoamine may have an average molecular weight between 285 and 860, but preferably has an average molecular weight of about 645.

The circulating treated water removes substantially all of the residual drilling mud (both solids and oils) and other contaminates from the well system. The drilling mud and fluids are carried in an agglomeration resembling gel-like soft masses of solids in a relatively stable suspension. The treated water effects a scrupulous cleaning of the well system and removes residual drilling mud, fluid and other contaminates in the flow lines, shaker, pits, valving, pumps and other components of the well system. As a result, this equipment, both on the surface and in the wellbore, retain no significant amounts of these contaminates. Stated in another manner, all of the remaining contaminates from the earlier clean water circulation step are now suspended in the treated water being circulated in the equipment 12 and 13. No extensive manual cleaning by rig workpersons is required. The unique treated water is removed from the equipment and carries the residual drilling mud in suspension.

While the treated water is yet being circulated within the well system, it is displaced via disposal lines 29-32 to a suitable non-polluting and safe disposal region. The displacing fluid is solids-free clean water added through inlet 24. After the well system is filled volumetrically with the solids-free clean water, the solids-free brine previously prepared as hereinabove described can be arranged for introduction into the wellbore.

Using the mud pump 16, the solids-free brine is moved from the pit 28 into the wellbore equipment (e.g., tubing, casing annulus and wellhead apparatus) and it volumetrically displaces the solids-free clean water through the disposal line 32. The well system is now ready for subsequent activities once the downhole wellbore equipment is filled with the solids-free brine.

It is preferred that the wellpipe or drillpipe, as the case may be, is reciprocated and rotated in the wellbore during circulation of the treated water. The pipe in deviated wells can be reciprocated about 10 m (30 feet) with periodic rotation and this movement function accelerates removal of the drilling mud from the pipe and wellbore and its suspension in the treated water.

In some cases, an improved cleaning result is obtained if the alcohol and surfactant are added in two parts to clean water for producing the treated water. For example, one half of the chemicals are added after circulation has been underway for thirty minutes, or when the wellpipe is to be reciprocated and rotated in the wellbore.

The use of circulating clean and treated waters in the well system is of advantage since only small amounts of the waters are required. It has been found that the volumes of clean water, treated water and solids-free waters used in this process are in the range of 40 to 160 $m^3$ (250 to 1000 barrels). This feature is important in water-scarce areas.

In an alternative embodiment of this invention, aqueous spacer plugs can be used before, after (or both) the treated water as the spacer fluid in place of the clean water. The primary purposes of the preceding aqueous spacer are to (I) reduce gravity mixing of the treated water with either the drilling fluid or solids-free brine, and (2) retain and transport well fluid solids such as drilling mud, silt, sand, oil, barite, ferrous and ferric precipitates and other undissolved solids from the wellbore equipment, similar to the clean water utilized in the previously described embodiment. The primary purpose of the following aqueous spacer is to reduce gravity mixing between the treated water and brine.

Usually, the present process removes drilling fluid from the well bore very efficiently so that only the first portion of the circulating brine - e.g. 16 $m^3$ (100 barrels) - has any solid contamination.

An aqueous spacer may contain a viscosifier to produce a non-newtonian fluid that can be circulated in laminar flow in the wellbore equipment. For example, a small amount - e.g. 8 $m^3$ (50 barrels) - of fresh or salt water is placed into the pit 18 and a viscosifier is added that produces a gelled state for this mixture. For example, viscosifiers used in drilling mud products are suitable such as "Polybrine", "Polymix", "Cellosize", "Duovis" (tradenames) sold commercially by Magcobar Division of Dresser Industries, Inc. For oil-based drilling fluids, this source also has available a diesel viscosifier under the tradename "Oilfaze" which can be used in conjunction with diesel fuel or selected crude oils, clays such bentone, emulsifiers and weighting agents (e.g. barite). The viscosifier is added to the aqueous phase in amounts sufficient to produce the gelled state and to maintain this state under laminar flow conditions at the linear flow velocity where the following treated water moves at such velocity under turbulent flow. Generally, the gelled aqueous spacer operates at a Reynolds number of about 100 whereas the treated water operates at a Reynolds number of about 2000.

Stated in a different manner, at a certain linear flow velocity, the gelled aqueous spacer flows below or at the maximum velocity for plug (laminar) flow while the treated water flows at or above the minimum critical velocity to achieve turbulent flow in the wellbore equipment.

There are many suitable viscosifiers available from mud product suppliers, and they can be substituted for the specific tradename products heretobefore recited. These products have known rheological properties and a gelled aqueous phase can be prepared with the desired non-newtonian state.

In many cases, it is preferred that a weighting agent be also included in the gelled aqueous phase. For example, barite may be added to increase the phase density up to 9 kg (20 pounds) per gallon. Other viscosifiers such as Bentone, Attapulgite, or asbestos fibers can be used with good results. These materials also enhance the action of the gelled aqueous spacer to act as a mechanical swab not only to displace the drilling fluid and mud from the wellbore equipment, but also to remove mud cake deposited on the walls of the well pipe, casing or wellbore.

Although the gelled spacer fluid acts as a true plug or mechanical swab, well effects cause it to be "strung out" in its passage through the wellbore equipment. For example, 8 m$^3$ (50 barrels) of the plug may be introduced into the wellbore equipment, but it may appear at the outflow with twice this volume because of the entrained drilling fluid, etc. intermingled within it.

If the drilling fluid is oil-based, and especially if it is an inverted emulsion (water-in-oil), the gelled aqueous spacer preferably includes a liquid blend of emulsifiers, wetting agents, lubricants, gellants and other additives such as organophyllic clay, HEC polymers, starch, polyanionic cellulose, guar gum etc., which additives quickly form a stable inverted emulsion fluid when mixed with diesel fuel and water under moderate shear level mixing. For example, the aqueous spacer of inverted emulsion type can be formed of water and organophyllic clay. The spacer prepares the mud coated pipe and the oil-based drilling fluid for effective displacement from wellbore equipment by the following treated water slug.

The aqueous spacer is moved from the pit 18 and suction pit 21 and forced by the pumps 16 into the wellbore equipment 13. In deep wells, the aqueous spacer is introduced into the well pipe (tubing or drill pipe) and displaces drilling fluid upwardly from the annulus to the shale shaker 17, or other suitable disposal as by disposal line 32. However, in other applications, the aqueous spacer can be introduced downwardly through the annulus and force the drilling fluid upwardly through the wellpipe. In either event, the aqueous spacer is in a gelled state forming a discrete plug that acts as a mechanical swab in displacing the drilling fluid before it.

The linear velocity of the aqueous spacer plug being displaced through the wellbore equipment depends upon the hole diameter or annulus size and usually ranges between 24 and 61 m (80 and 200 feet) per minute to maintain the laminar flow condition for the non-newtonian aqueous spacer which has flow conditions Reynolds Number of about 100.

The treated water is circulated into the wellbore equipment usually immediately following a gelled aqueous spacer. The treated water volumetrically displaces the plug of aqueous spacer and also provides a unique cleaning function in removing residual drilling fluid and other solids such as rust, ferrous and ferric precipitates, sand, silt, oil and other undissolved materials from the wellbore equipment.

The treated water is prepared, preferably in the mud pit 18, by adding together clean (fresh or sea) water, surfactant and an alcohol. The treated water is subjected to agitation and shear mixing by the mixer 19. The amount of treated water depends on the capacity and strength of the wellbore equipment 13, the formation pressure, and the physical condition of the well, (i.e. open high pressure perforations, or liner tops that will not allow reduction in hydrostatic head) and may be prepared in an amount, for example, 4 - 160 m$^3$ (25 - 1000 barrels).

Usually, the treated water is comprised in a chemical-to-water ratio equivalent to 4 drums (55 gallons each) of the chemicals to each 500 barrels (42 gallons each) of water added in the pit 18. Each drum is comprised of a 50/50 composition of the surfactant and alcohol. As a result, the treated water has a concentration by volume of about 1.0% of surfactant and alcohol. In most situations, the concentration of the chemicals need not be greater than 2%, and a 1% concentration usually works well. If desired, other materials can be added that assist the treated water performance, such as sand, walnut shells, etc. The alcohol and surfactant can be selected according to the previous embodiment hereinabove described.

The treated water is moved from the pits 18 and 21 and forced by the mud pumps 16 into the wellbore equipment immediately behind the plug of gelled aqueous spacer. The flow of the treated water drives this plug before it, which plug volumetrically displaces the drilling fluid from the wellbore equipment 13. Besides its function as a displacing fluid, the treated water removes residual drilling fluid and its mud cake from the wall surfaces when pumped under turbulent flow conditions.

The treated water has a Reynolds number of about 2000 and turbulent flow conditions are obtained in the wellbore equipment at linear flow velocities between about 24 m (80 feet) and about 61 m (200 feet) per minute. The turbulent flow condition is meant to include true turbulence above the critical velocity for the treated water and also the condition at the upper limits of linear flow which are essentially in the effect the same as turbulent flow in cleaning results relative to the drilling fluid. Thus, the treated water and the plug of gelled aqueous spacer can be moved at a range of flow velocities where the treated water is in turbulent flow and the plug moves at linear flow conditions.

As in the previous embodiment, the treated water removes substantially all of the residual drilling fluid (both mud, solids and oils) from the well system. The drilling fluid is carried in an agglomeration resembling gel-like soft masses of solids in a relatively stable suspension. The treated water effects a scrupulous cleaning of the wellbore equipment and removes residual drilling fluid and mud in the wellbore equipment and no significant amounts of drilling fluid constituents escape its cleaning action. Stated in another manner, all of the remaining drilling fluid and mud from the earlier displacement by the gelled aqueous spacer is now suspended in the treated water. No cleaning by rig workpersons is required using swabs, etc. in the wellbore equipment. The unique treated water is removed from the equipment and carries the residual contaminates in suspension.

While the treated water is yet being circulated within the wellbore equipment, it is displaced via disposal line 29-32 to a suitable non-polluting and safe disposal region. It can also be treated in the shale shaker, if desired. The treated water is followed immediately by a second plug of gelled aqueous spacer which can be the same composition and volume as the previously described spacer. However, the second plug can have a different gelled aqueous spacer composition if desired.

In some operations, the second plug can be made more compatible for volumetric displacement of the treated water by the subsequently introduced solids-free brine. For this purpose, the viscosifier is preferably a high molecular weight polymer used in clear brine systems, such as hydroxyethyl cellulose (HEC). A fluid-loss control agent can also be added. For example, the blend of HEC and fluid-loss control agent can be supplied by the tradename product "Polybrine", a product of Magcobar Division of Dresser Industries. In any event, the viscosifier and other additives must be operable at the temperature conditions in the wellbore equipment so as to function properly as the plug of gelled aqueous spacer.

The second plug of gelled aqueous spacer is introduced into the wellbore equipment 13 by the mud pump and immediately followed by the solids-free brine previously prepared as hereinabove described. Using the mud pump 16, the solids-free brine is moved from the pit 28 into the wellbore equipment and it volumetrically displaces the first plug of gelled aqueous spacer, the treated water, and the second plug of gelled aqueous spacer through the disposal line 32. The brine enters a clean well system free of drilling fluid, solids or other contaminates. The brine is pumped into the wellbore equipment at the same linear flow velocity as the treated water so that the plugs of gelled aqueous spacer move at laminar flow conditions while the treated water flows at substantially turbulent flow conditions. Preferably, there is no interruption of circulation of these fluids but momentary stoppages of flowing can be tolerated since the plugs of gelled aqueous spacers minimize cross contamination between the drilling fluid, treated water and brine being volumetrically displaced through the wellbore equipment.

The well system is now ready for subsequent activities once the wellbore equipment 13 is filled with the solids free brine.

In an actual field test on an oil-based mud, the present process was used to complete a well with solids-free brine. The following data define this process:

(1)     well depth 5335 m (17,500 feet) with 180 mm (7 inch) casing and 90 mm ($3\frac{1}{2}$") drill pipe with a drill pipe volume of 20 $m^3$ (128 barrels), an annular volume of 60 $m^3$ (378 barrels) and a total volume of 80 $m^3$ (506 barrels);

(2)     first plug of gelled aqueous spacer was 7.5 $m^3$ (47 barrels) of 8.7% by volume of Bariod EZ Spot in clear water weighted with barite to 1.74 kg/litre (14.5 pounds per gallon);

(3)     the treated water was 91.5 $m^3$ (575 barrels) of sea water containing 1.74% by volume of 50/50 ratio of 2-ethyl hexanol and bis hydroxy ethyl cetyl amine;

(4)     the second plug of gelled aqueous spacer was 1.6 $m^3$ (10 barrels) of 0.01% by weight of HEC in clear water;

(5)     the following brine was 1.2 kg/litre (10 pounds per gallon) of solids-free calcium chloride solution.

The first plug was introduced into the drill pipe followed by the treated water with a maximum annular flow velocity of 41.5 m (136 feet) per minute. Then, the second plug was introduced and followed by the brine at an annular flow velocity of 114.5 m (375 feet) per minute. The well equipment was displaced within about $2\frac{1}{4}$ hours.

Although about 1.6 $m^3$ (10 barrels) of a 1.74 kg/litre ($14\frac{1}{2}$ pound per gallon) Invermul drilling mud was inadvertently introduced ahead of the second plug, the final portions of the treated water were clear as originally introduced. The well equipment was free of solids so that the brine remained solids free and thereinafter producing the one-pass cleansing process described herein.

The initial portions of the treated water displaced from the well equipment brought up some tonnes of dirt and several hundred kg of cement even though circulation was interrupted several times during the process. It is estimated that 12 hours of rig time was saved by using this process instead of earlier chemical washing procedures and the well equipment was made substantially free of solids before introduction of the brine.

In another field test, in wellbore equipment, a 1.86 kg/litre (15.5 pounds per gallon) Invermul oil based mud was displaced at a reverse flow of about 0.65 $m^3$ (four barrels) per minute. A first spacer plug was introduced onto the drilling mud, which spacer was 3 $m^3$ (20 barrels) formed of 0.4 $m^3$ (2 drums) of Baroid "Easy Spot" emulsifier and diesel oil and weighted to 1.86 kg/litre (15.5 pounds per gallon). A second spacer plug followed the first spacer, and was used in an amount of 2.4 $m^3$ (15 barrels). The second spacer was sea water containing 0.14 kg/litre (50 pounds per barrel) of "Nut Plug" (ground walnut shells) with 0.1 $m^3$ (one-half drum) of a 50/50 mixture of surfactant and alcohol as used in the treated water of the previous example. Yet a third spacer was used following the second spacer plug. This third spacer was 6 $m^3$ (40 barrels) of a high viscosity (120 Saybolt) mixture of HEC polymer with 0.285 kg/litre (100 pounds per barrel) of "frac" sand. Then, the treated water slug in amount of 1.5 $m^3$ (10 barrels) was introduced and immediately followed by the solids-free brine. This treated water was used in amount of 1.5 $m^3$ (10 barrels) formed of fresh water containing 0.1 $m^3$ (one-half drum) of the surfactant and alcohol of the previous example.

About 4 $m^3$ (25 barrels) of the brine first circulated through the wellbore equipment was diluted and therefore discarded. The balance of the brine was made solids-free by filtration for about 90 minutes in circulation within a filter system.

A storm interrupted the above process for 24 hours. It was noted that the "Nut Plug" floated to the top of the second spacer. However, when circulation was again practiced, the treated water slug performed as expected.

In other field tests, the present process used only the first spacer plug and the treated water slug before the circulation of solids-free brine through the wellbore equipment for good removal of the drilling mud. Where oil-based muds are present, it is preferred that the first spacer plug contain, or be preceded by, a few barrels of an organic based solvent which may contain water-in-oil emulsifier.

The use of the treated water and aqueous spacer plugs in the well system is of advantage since only small amounts of water are required. It has been found that the volumes of treated water and gelled aqueous spacers used in this process are in the range of 16 to 160 $m^3$ (100 to 1000 barrels) and are generally lower in volume than a comparable volume as practiced in the first embodiment (i.e. using clean water instead of spacer plugs). This feature is important in water scarce areas and from a waste disposal viewpoint.

From the foregoing, it will be apparent that there has been described a process for removing contaminates from a high density salt type completion and packer brine and for removing drilling mud and fluids and other contaminates from a well system prior to the introduction of the solids-free brine. Various changes and alterations may be made in the practice of this process by those skilled in the art without departing from the scope of the invention as defined in the appended claims. The present description is intended to be illustrative and not limitative of the present invention.

The features disclosed in the foregoing description, in the following claims and/or in the accompanying drawings may, both separately and in any combination thereof, be material for realising the invention in diverse forms thereof.

CLAIMS

1.    A process for eliminating contaminates from a well system prior to introduction of solids-free completion and packer brines, characterised by displacing contaminates from the well system by circulating treated water therein to displace a major portion of the contaminates from the well system, said treated water comprising clean water containing a surfactant and alcohol and subjected to agitation and shear mixing; and by thereafter circulating in the well system a solids-free well fluid for displacing or carrying the treated water from the well system.

2.    A process according to claim 1, including the further steps of displacing contaminates from the well system by circulation therein of a spacer fluid introduced prior to said treated water until a major portion of the contaminates are carried in said spacer fluid; displacing said spacer fluid from the well system by the said treated water; and displacing to a suitable disposal region the treated water carrying contaminates before introducing the solids-free well fluid and without interruption of circulation through the well system, using the solids-free well fluid from a source exterior of the well system.

3.    A process according to claim 1 or 2, wherein a spacer fluid is introduced after said treated water, but prior to introducing the solids-free well fluid, without interruption of circulation through the well system.

4.    A process according to claim 2 or 3, wherein the spacer fluid or one or both of the two spacer fluids is clean water, a brine, or a mixture of clean water and brine.

5.    A process according to claim 2 or claims 2 and 3, wherein said spacer fluid preceding the treated water is an aqueous spacer containing a viscosifier to produce a non-newtonian fluid that is circulated in the well system as a slug in a gel state in laminar flow, and the treated water is a newtonian fluid that is circulated at turbulent flow conditions through the well system.

6.    A process according to claim 3, or claim 4 or 5 when dependent thereon, wherein said spacer fluid following the treated water is an aqueous spacer containing a viscosifier to produce a non-newtonian fluid that is circulated in the well system as a slug in a gel state in laminar flow, for carrying the treated water from the well system without substantial mixing of the aqueous spacer or treated water into the following solids-free well fluid.

7.    A process according to claim 5 or 6, wherein the aqueous spacers are formed of clean water containing a viscosifier polymer.

8.    A process according to claim 5, or claim 6 or 7 when dependent thereon, wherein a hydrocarbon such as an organic based solvent is included in the aqueous spacer fluid preceding the treated water when the drilling fluid includes inverted emulsion (water-in-oil) residues such as mud cake.

9.    A process according to claim 2 or any claim dependent thereon, wherein the aqueous spacer preceding the treated water contains a weighting agent.

10.   A process according to any preceding claim, wherein said surfactant has a molecular weight in the range from about 150 to about 500 with predominantly hydrophobic characteristics, and is selected from aliphatic amines, aliphatic amides and aliphatic amine oxides in which the amine or amide has an alkyl group with between 8 and 18 carbon atoms; and wherein said alcohol is an aliphatic alcohol with between 5 and 8 carbon atoms.

11.   A process according to claim 10, wherein the surfactant is bis hydroxy ethyl cetyl amine or the amide reaction product of oleic acid and diethanolamine and triethanolamine; and the alcohol is n-hexanol or 2-ethyl hexanol.

12.   A process according to any preceding claim, wherein the alcohol is added first to the clean water and then the surfactant is added to produce the treated water.

13.    A process according to any preceding claim, wherein the surfactant and alcohol are each added in a volume of less than about 1 percent to the clean water for producing the treated water.

14.    A process according to claim 5 or 6, and claim 13, wherein the plug volume of the or each aqueous spacer is an order of magnitude less than the volume of treated water circulated in the well system.

15.    A process according to any preceding claim, wherein the well pipe is reciprocated within the well bore with periodic rotation to assist in suspending drilling mud in the circulating treated water.

16.    A process for producing a solids-free aqueous fluid from an aqueous fluid contaminated with solids such as rust, sand and drilling mud, by introducing in small effective amounts an aliphatic alcohol with between 5 and 8 carbon atoms and a surface active chemical aid into the fluid, thereby to agglomerate solids therein, and separating the agglomerated solids from the fluid before it is utilized in a solids-free state, wherein the surface active chemical aid includes a surfactant having a molecular weight in the range of about 150 to about 500 with predominantly hydrophobic characteristics and is selected from aliphatic amines, aliphatic amides and aliphatic amine oxides, in which the amine or amide have an alkyl group with between 8 and 18 carbon atoms, characterised in that the alcohol is 2-ethyl hexanol.

17.    A process according to claim 16, wherein the aqueous fluid is a well fluid of a high density type having at least one of sodium, potassium, calcium and zinc chlorides and bromides, and the agglomerated solids are separated from the fluid before its introduction into a well bore in a solids- free state.

18.    A process according to claim 16 or 17, wherein the surfactant is the amide reaction product of diethanolamine and triethanolamine with an organic fatty monobasic acid of the general formula $C_nH_{2n+1}COOH$ wherein n is an integer between 12 and 18.

19.    A process according to claim 16, 17 or 18, wherein the alcohol and surfactant are used in a 50/50 mixture by volume.

SOLIDS CONTAMINATED BRINE

CHEMICALS

WATER

SEA WATER

22

23

24

12

13

17 SHALE SHAKER

MUD PIT

19  18

SUCTION PIT 21

32

11

30 DISPOSAL

DISPOSAL

16 MUD PUMPS

14

26

31

DISPOSAL

BRINE SUCTION PIT

28

BRINE FILTER

27

29

DISPOSAL

32 SOLIDS-FREE BRINE

0103779